Europäisches Patentamt

European Patent Office

Office européen des brevets

(19)

(11) EP 0 732 845 B1

(12) FASCICULE DE BREVET EUROPEEN

(45) Date de publication et mention
de la délivrance du brevet:
**01.12.1999 Bulletin 1999/48**

(51) Int Cl.⁶: **H04N 5/073**

(21) Numéro de dépôt: **96400397.4**

(22) Date de dépôt: **26.02.1996**

(54) **Procédé et dispositif de synchronisation d'un signal vidéo numérique**

Verfahren und Vorrichtung zur Synchronisierung eines digitalen Videosignals

Method and apparatus for synchronising a digital video signal

(84) Etats contractants désignés:
**DE FR IT**

(30) Priorité: **13.03.1995 FR 9502877**

(43) Date de publication de la demande:
**18.09.1996 Bulletin 1996/38**

(73) Titulaire: **THOMSON BROADCAST SYSTEMS**
**95800 Cergy Saint-Christophe (FR)**

(72) Inventeurs:
• **Portron, Isabelle**
**92050 Paris La Défense Cedex (FR)**
• **Demay, Alain**
**92050 Paris La Défense Cedex (FR)**
• **Le Queau, Philippe**
**92050 Paris La Défense Cedex (FR)**

(74) Mandataire: **Ruellan-Lemonnier, Brigitte**
**THOMSON multimedia,**
**46 quai A. Le Gallo**
**92648 Boulogne Cédex (FR)**

(56) Documents cités:
EP-A- 0 415 268       WO-A-93/10627
GB-A- 2 191 906       US-A- 4 018 990

• PATENT ABSTRACTS OF JAPAN vol. 018, no.
441 (P-1788), 17 Août 1994 & JP-A-06 139133
(SONY CORP), 20 Mai 1994,

## Description

La présente invention concerne un procédé et un dispositif de synchronisation d'un signal vidéo numérique par rapport à un signal de synchronisation au moyen d'une unité de mémorisation dans laquelle le signal vidéo à synchroniser est écrit dans sa fréquence propre, et ensuite est lu selon la fréquence du signal de synchronisation, de façon à constituer un signal vidéo numérique synchronisé.

Une image vidéo est actuellement constituée de deux trames successives. Un signal vidéo comprend une succession d'images dont la cadence est définie par une horloge qui fournit la fréquence du signal vidéo. La précision de l'horloge et celle des appareillages, ainsi que les conditions de transmission du signal vidéo font que le signal vidéo reçu par un récepteur comporte une fréquence qui n'est pas rigoureusement régulière.

Dans un centre de production d'images, tel qu'un studio de télévision, on procède très souvent à des montages de séquences d'images vidéo provenant de plusieurs sources différentes à l'aide des commutations entre les différents signaux vidéo reçus. Or, le défaut de régularité des fréquences et le déphasage entre les différents signaux vidéo peuvent créer, lors de leur commutation, des parasites au niveau des séquences d'images vidéo.

Pour résoudre ce problème, on a recours à une technique de synchronisation qui consiste à synchroniser les fréquences des signaux vidéo reçus par rapport à une fréquence de référence ou fréquence de synchronisation. Ainsi, les images vidéo provenant de sources différentes sont rendues synchrones avant d'être traitées pour la production des séquences d'images vidéo dans le studio de télévision.

Selon la technique actuelle, on a besoin d'un dispositif de synchronisation ou synchroniseur pour la synchronisation d'un signal vidéo provenant d'une seule source extérieure au studio. Il y a autant de synchroniseurs que de sources extérieures d'images vidéo afin de rendre les signaux vidéo synchrones par rapport aux signaux vidéo produits par les sources d'images (caméras, magnétoscopes, etc...) internes au studio. Le synchroniseur comprend une mémoire dans laquelle on écrit une image vidéo avec la fréquence du signal vidéo reçu et on lit ensuite cette image vidéo selon la fréquence d'un signal de synchronisation généré par le studio. Le signal vidéo résultant de la lecture de la mémoire est ainsi synchronisé.

Pour la production des émissions d'informations télévisées par exemple, on utilise très souvent des sources vidéo situées à l'extérieur du studio. Plus les sources vidéo extérieures sont nombreuses, plus le nombre nécessaire de synchroniseurs augmente afin de gérer chaque signal vidéo extérieur pour le rendre synchrone au signal de synchronisation du studio. Cela entraîne une augmentation du coût (synchroniseurs et raccordements supplémentaires nécessaires) et de l'encombrement des installations du studio. Pour résoudre ce problème, on peut envisager d'associer un synchroniseur à au moins deux sources vidéo extérieures. Cependant, les caractéristiques des synchroniseurs actuels ne sont pas suffisantes pour qu'un seul synchroniseur puisse réaliser la synchronisation de deux signaux vidéo déphasés provenant de deux sources différentes pendant leur commutation.

Le document WO - A - 93 10 627 décrit un appareil de synchronisation d'un circuit de balayage d'un appareil de visualisation comportant une mémoire tampon en entrée et une mémoire de visualisation à deux zones parallèles. Les deux zones sont écrites et lues en alternance à des cadences correspondant à la synchronisation du signal d'entrée à l'écriture et à la synchronisation de l'appareil de visualisation à la lecture. Les deux zones sont lues de manière à ce qu'aucune donnée au sein d'une image ne soit perdue, une zone n'étant lue qu'une fois que toute l'image a été traitée et mémorisée quitte à lire plusieurs fois rautre zone, ou bien de manière à ce qu'une image entière soit supprimée.

La présente invention a pour objet de proposer une solution simple et efficace pour résoudre les problèmes mentionnés ci-dessus grâce à un procédé et un dispositif de synchronisation d'une conception particulière.

L'invention a également pour objet de proposer un synchroniseur permettant la synchronisation d'un signal vidéo provenant de la commutation entre plusieurs sources vidéo différentes et de supprimer des parasites créés lors de la commutation d'images entre deux sources vidéo différentes.

L'invention a en outre pour objet de créer une image nette lors d'une suppression du signal vidéo ou d'un arrêt sur image.

L'invention a encore pour objet une technique de synchronisation avec une très grande tolérance au glissement en fréquence du signal vidéo.

Selon l'invention, on met en oeuvre un procédé de synchronisation d'un signal vidéo numérique tel que défini dans la revendication 1.

Un dispositif de synchronisation selon l'invention est défini dans la revendication 10.

Selon l'invention, on détecte, au début de chaque écriture d'images, le déphasage entre le signal vidéo d'entrée et le signal de synchronisation. Le déphasage est caractérisé par trois états différents selon un critère prédéterminé. En fonction de l'état d'écriture, et de la zone mémoire en cours de lecture, l'image vidéo sera mémorisée dans une zone mémoire choisie ou dans les deux zones mémoires simultanément. On peut ainsi conserver toujours un déphasage entre l'écriture d'une image et sa lecture au delà d'un seuil prédéterminé.

Lorsque la fréquence du signal vidéo est plus élevée que celle du signal de synchronisation ou inversement, il y a un phénomène de glissement en fréquence du signal vidéo qui change le déphasage d'un début d'écriture au suivant. Si ce glissement en fréquence fait en sorte que l'écriture tend à rattraper la lecture dans une même zone mémoire en dépassant un seuil prédéfini, l'invention permet de supprimer une image, c'est-à-dire que le signal vidéo synchronisé comporte une image en moins par rapport au signal vidéo d'entrée. Si au contraire, la lecture tend à rattraper l'écriture dans une même zone mémoire en dépassant le même seuil prédéfini, l'invention permet d'effectuer un gel d'image avec une interpolation de celle-ci. Bien entendu, la suppression ou le gel d'une image sont effectués automatiquement en fonction des états d'écriture selon des critères prédéterminés.

L'invention sera mieux comprise à l'étude de la description détaillée d'un exemple de réalisation prise à titre nullement limitatif et illustré par des dessins annexés, sur lesquelles :

> la figure **1** est une vue synoptique d'une installation de studio de télévision comprenant des synchroniseurs classiques,
> la figure **2** est une vue synoptique d'une installation de studio de télévision selon l'invention,
> la figure **3**, est une vue schématique expliquant le fonctionnement du dispositif de synchronisation de l'invention,
> la figure **4** est un schéma de définition des états d'écriture d'images vidéo selon l'invention,
> la figure **5** est un schéma explicatif des conditions de passage entre les états d'écriture selon la figure **4**,
> la figure **6** est une vue schématique expliquant le fonctionnement de l'invention pour le cas où la fréquence du signal vidéo est supérieure à la fréquence du signal de synchronisation,
> la figure **7** est un schéma similaire à la figure **6** pour illustrer le cas où la fréquence du signal vidéo est inférieure à la fréquence du signal de synchronisation,
> la figure **8** est un schéma explicatif du principe d'interpolation pour le gel d'images selon l'invention, et les figures **9** et **10** représentent une variante de définition des états d'écriture selon l'invention par rapport aux figures **4** et **5**.

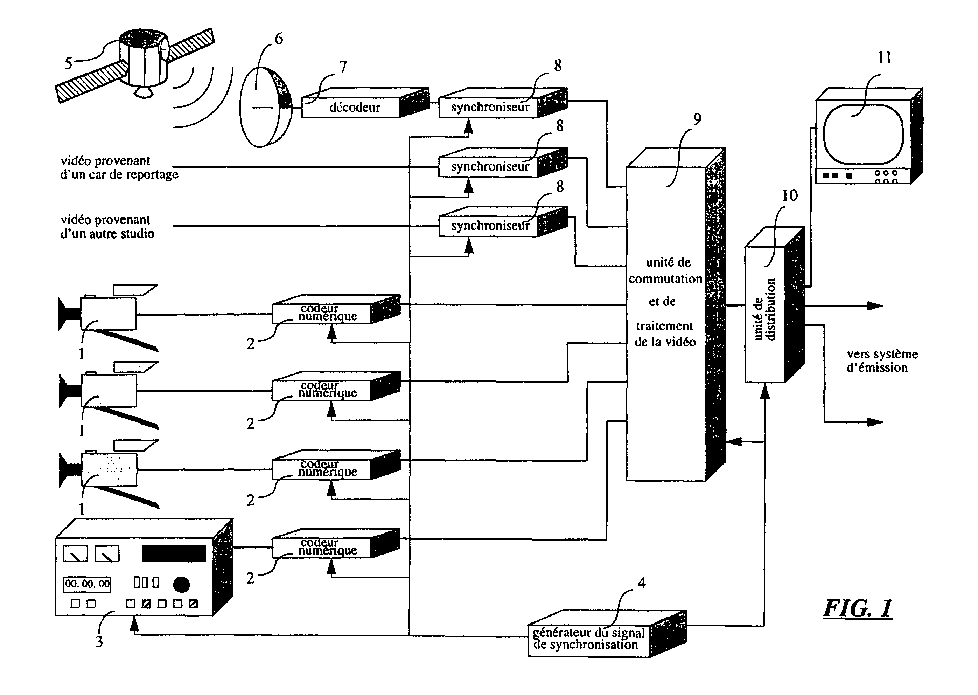

Selon la technique actuelle, pour équiper un studio de télévision (figure **1**), on utilise un certain nombre de caméras **1** montées en parallèle. Le signal vidéo issu de chaque caméra **1** est numérisé par un codeur numérique **2**. En plus des caméras **1**, un ou plusieurs magnétoscopes **3** peuvent être utilisés pour fournir un signal vidéo qui est numérisé par un codeur numérique **2**. L'ensemble des caméras **1**, des codeurs numériques **2** et des magnétoscopes **3** à l'intérieur du studio de télévision sont synchronisés par rapport à une fréquence de référence créée par un générateur **4** de signal de synchronisation.

Le studio de télévision est en général équipé de dispositifs de réception pour recevoir des signaux vidéo provenant des sources extérieures au studio. Par exemple, pour recevoir un signal vidéo émis par un satellite **5**, on utilise une antenne parabolique **6** équipée d'un décodeur **7** pour fournir un signal vidéo numérisé à l'entrée d'un synchroniseur **8**. De même, on peut recevoir et numériser les signaux vidéo provenant d'un car de reportage extérieur ou d'un autre studio de télévision, et les envoyer chacun vers l'entrée d'un synchroniseur **8**. On utilise donc autant de synchroniseurs **8** que de sources extérieures de signaux vidéo à recevoir.

Le générateur **4** de signal de synchronisation fournit aux synchroniseurs **8** la même fréquence de référence, de façon à ce que aux entrées de l'unité **9** de commutation et de traitement de la vidéo, les signaux vidéo numérisés issus des codeurs numériques **2** et des synchroniseurs **8** soient rendus synchrones par rapport à la fréquence de référence du signal de synchronisation et phasés par rapport à ce signal. L'unité **9** de commutation et de traitement de la vidéo permet de traiter numériquement les signaux vidéo et de produire ainsi des séquences vidéo qui sont envoyées à une unité de distribution **10**. Les séquences vidéo au niveau de l'unité de distribution **10** sont visualisées par un ou plusieurs moniteurs **11** pour que l'opérateur fasse la composition des séquences vidéo à diffuser vers le système d'émission non représenté. L'unité **9** de commutation et de traitement de la vidéo et l'unité de distribution **10** sont également synchronisées par le générateur **4** de signal de synchronisation.

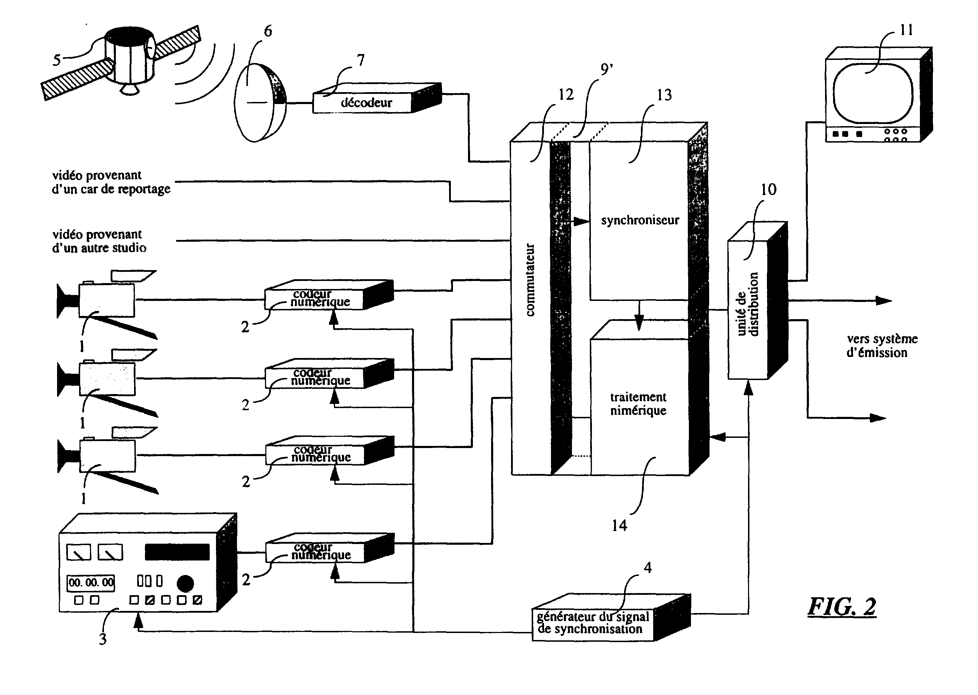

Sur la figure **2** est illustré schématiquement le même studio de télévision équipé d'une installation conforme à la présente invention. Par rapport à la figure **1**, la différence essentielle se situe au niveau de l'unité centrale **9'** qui remplace l'ensemble des synchroniseurs **8** et de l'unité **9** de commutation et de traitement de la vidéo de la figure **1**. Les parties communes des deux figures déjà décrites pour la figure **1** ne seront pas répétées pour la figure **2**.

Selon la figure **2**, les signaux vidéo numérisés provenant des sources intérieures **1, 3** et des sources extérieures sont envoyés en parallèle aux entrées d'un commutateur **12** faisant partie de l'unité centrale **9'** qui est synchronisée par le générateur **4** de signal de synchronisation. Le commutateur **12** est relié à l'entrée d'un dispositif de synchronisation **13** ou synchroniseur qui peut être enfermé dans un boîtier indépendant ou être intégré dans l'architecture électronique de l'unité centrale **9'**. La sortie du synchroniseur **13** est reliée à l'entrée d'une unité **14** de traitement numérique de la vidéo pour la production des séquences vidéo destinées à l'unité de distribution **10**. Le commutateur **12** peut être relié à l'unité **14** de traitement numérique de la vidéo pour lui fournir directement, sans passer par le synchroniseur **13,** un ou plusieurs signaux vidéo numériques provenant d'une source vidéo intérieure **1, 3** et déjà synchronisés par le générateur **4** du signal de synchronisation.

Comme on peut le voir clairement sur la figure **2**, l'invention permet le remplacement des synchroniseurs **8** classiques qui sont associés à chacune des sources extérieures de signal vidéo, par un seul synchroniseur **13** faisant partie de l'unité centrale **9'**, ce qui réduit notamment les coûts d'installation du studio de télévision.

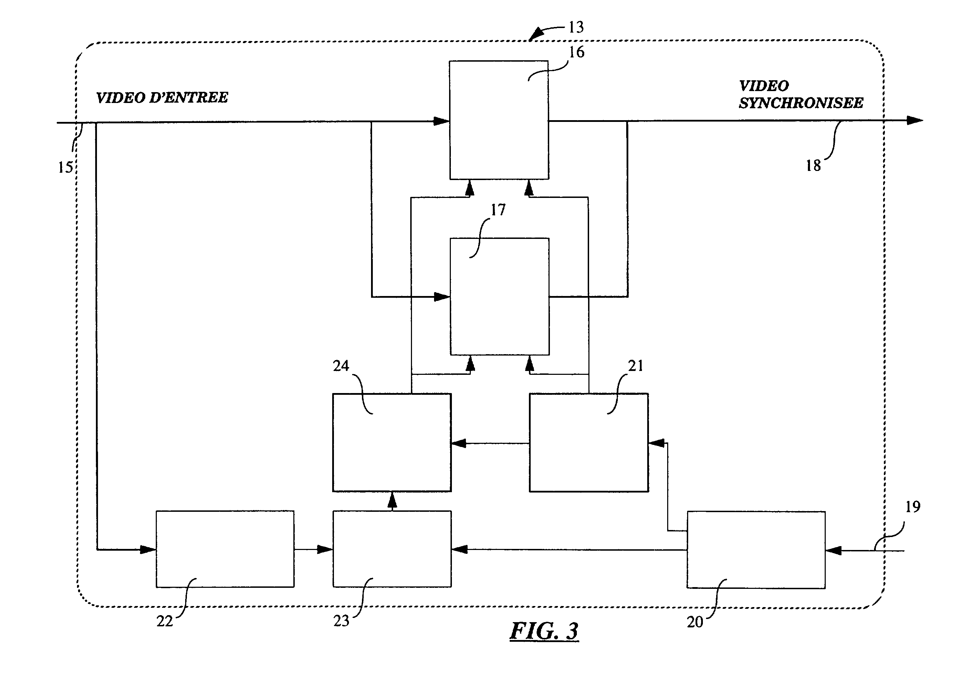

La figure **3** illustre le principe de fonctionnement du synchroniseur **13** illustré sur la figure **2**. Le signal vidéo d'entrée **15** est stocké dans une unité de mémorisation qui comprend deux mémoires **16, 17** mises en parallèle, chacune pouvant mémoriser une image vidéo composée de deux trames successives. Le contenu des mémoires **16, 17** est lu séquentiellement d'une mémoire à l'autre de façon alternative, à la sortie du synchroniseur **13** le signal vidéo **18** est synchronisé.

Pour commander la lecture séquentielle des mémoires **16, 17,** le synchroniseur **13** reçoit le signal de synchronisation **19** provenant du générateur **4** de signal de synchronisation (figure **2**) et procède à une extraction de la fréquence d'horloge de référence et le début de lecture d'une image (ou top de lecture d'image) par une unité d'extraction **20**. Une unité de gestion de la lecture **21** échantillonée par l'horloge du signal de synchronisation permet de commander la lecture des mémoires **16, 17** en fonction des caractéristiques du signal de synchronisation fournies par l'unité d'extraction **20,** et d'indiquer en temps réel la mémoire **16** ou **17** en cours de lecture.

Pour commander l'écriture des images vidéo dans les mémoires **16, 17,** une unité d'extraction **22** permet d'extraire du signal vidéo d'entrée **15,** la fréquence propre du signal vidéo d'entrée et le début de chaque image (ou top d'écriture d'image) du signal vidéo. Ces caractéristiques du signal vidéo d'entrée **15** sont fournies à une unité **23** de détermination des états d'écriture en comparant le déphasage du top d'écriture d'image fourni par l'unité d'extraction **22** par rapport au top de lecture d'image fourni par l'unité d'extraction **20** et en tenant compte de l'état d'écriture précédent. Une unité de gestion de l'écriture **24** échantillonnée par l'horloge du signal vidéo d'entrée reçoit d'une part un signal représentant l'état d'écriture provenant de l'unité **23** de détermination et d'autre part l'indication du numéro de la mémoire en cours de lecture provenant de l'unité de gestion de lecture **21,** en vue de commander à chaque top d'écriture d'image , l'écriture d'une image dans l'une ou les deux mémoires **16, 17.**

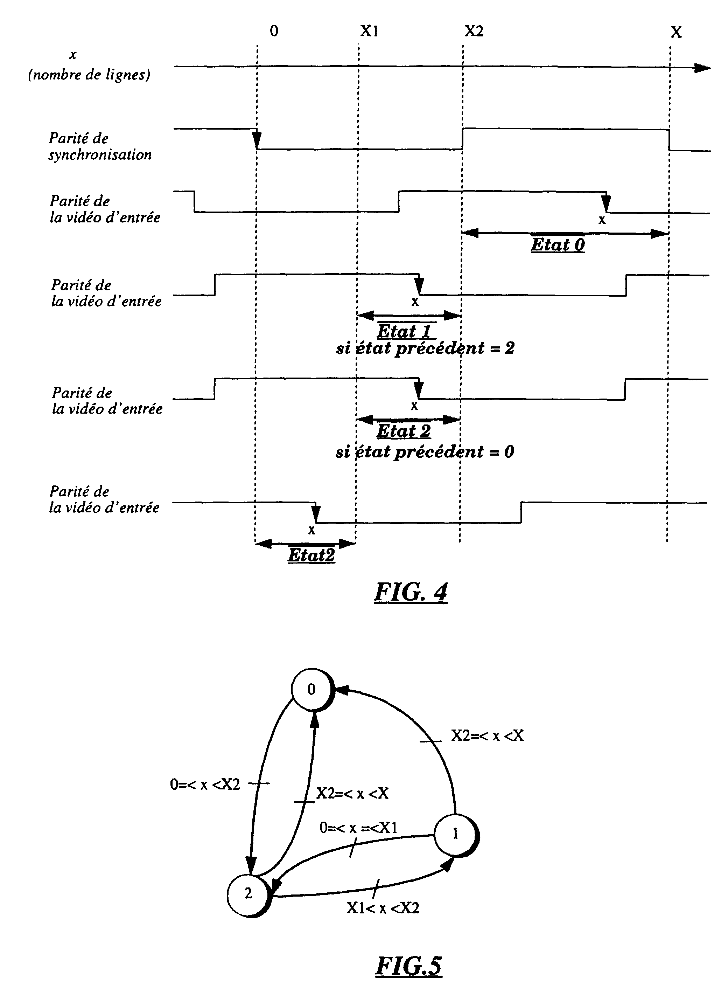

Les figures **4** et **5** montrent le principe de détermination, par l'unité **23** (figure **3**), des états d'écriture selon l'invention. L'unité de détermination **23** contient un moyen de comptage non représenté qui est remis à zéro à chaque top de lecture d'image qui est constitué par le front descendant pour chaque image selon la parité de synchronisation (figure **4**). De même que pour le top de lecture d'image, chaque top d'écriture d'image est représenté par le front descendant de chaque image selon la parité de la vidéo d'entrée (figure **4**). Dans l'hypothèse d'une image constituée de X lignes de balayage, on délimite trois zones pour déterminer trois états d'écriture à l'aide de deux nombres entiers intermédiaires X1 et X2. Pour faciliter la description, on choisi X1 sensiblement égal à $\frac{X}{4}$ (ce qui correspond à une demi-trame d'image), et X2 sensiblement égal à $\frac{X}{2}$ (ce qui correspond à une trame d'image).

Le compteur à l'intérieur de l'unité de détermination **23** compte le nombre de lignes x de balayage à partir du top de lecture d'images. Au moment du top d'écriture d'images, le nombre x compté représente le déphasage du top d'écriture d'images par rapport au top de lecture d'images. Selon l'invention, on définit deux états normaux d'écriture (état 0 et état 2) et un état intermédiaire d'écriture (état 1) en fonction du déphasage du signal vidéo et de l'état d'écriture précédent. La définition des états ainsi que le passage entre les états sont indiqués de façon explicites sur les figures **4** et **5**.

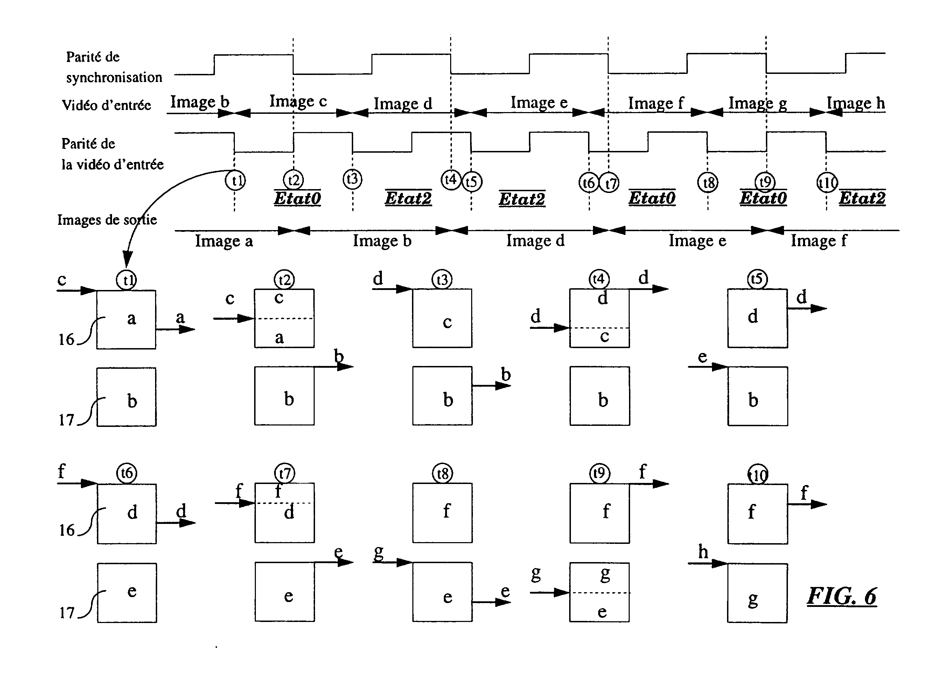

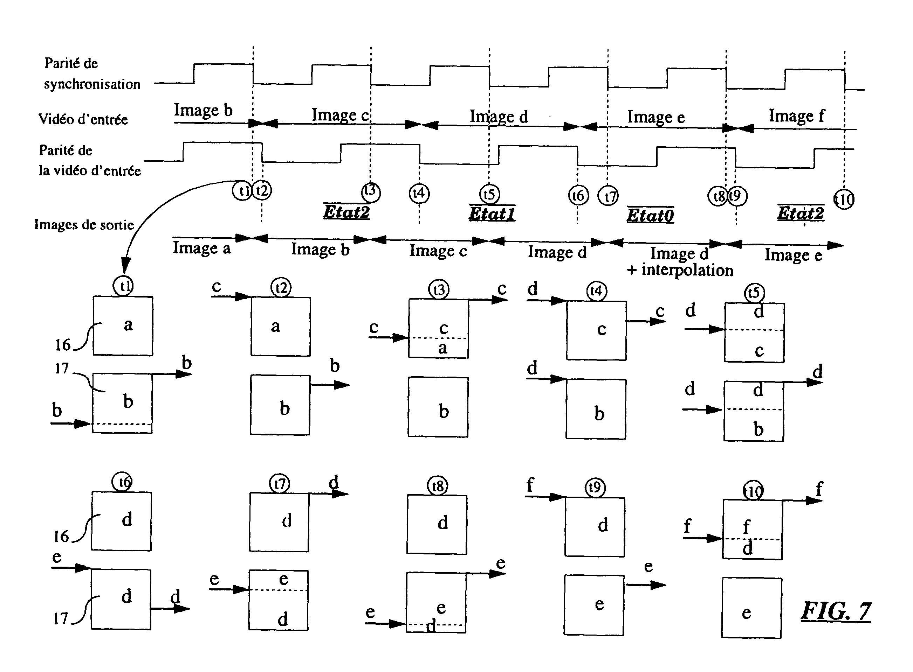

L'unité de gestion de l'écriture **24** commande l'écriture, à chaque top d'écriture d'image selon le critère suivant. Si l'état d'écriture est 0, l'écriture se fait dans la même mémoire **16** ou **17** que celle en cours de lecture. Si l'état d'écriture est **2**, l'écriture se fait dans la mémoire différente de celle en cours de lecture. Si l'état d'écriture est **1**, alors l'écriture de l'image se fait simultanément dans les deux mémoires **16** et **17** quelque soit la mémoire en cours de lecture. Les figures **6** et **7** permettent de mieux illustrer ce critère de gestion d'écriture dans les mémoires **16, 17.**

Sur la figure **6** est illustrée schématiquement la gestion de l'écriture dans le cas où il y a un glissement en fréquence du signal vidéo d'entrée par rapport au signal de synchronisation en ce sens que la fréquence d'écriture est plus élevée que la fréquence de lecture. Sur la première ligne est illustrée schématiquement la gestion de lecture des mémoires **16, 17** selon la parité de synchronisation. Les tops de lecture d'images sont repérés séquentiellement par t2, t4, t7, et t9. Sur la troisième ligne est représentée la parité de la vidéo d'entrée dont les tops d'écriture sont séquentiellement indiqués par t1, t3, t5, t6, t8 et t10. En se référant à la figure **3**, on peut dire que la parité de synchronisation et la parité de la vidéo d'entrée sont respectivement issues des unités d'extraction **20** et **22.**

Sur les seconde et quatrième lignes de la figure **6** sont représentées respectivement la séquence des images de la vidéo d'entrée qui seront écrites dans les mémoires **16** et **17,** et la séquence des images vidéo lues et synchronisées sortant du synchroniseur **13** (figure **3**). A l'instant t1 qui est le top d'écriture de l'image c, on détermine d'une part l'état d'écriture (selon la figure **4**) qui est 0 puisque le nombre de lignes compté x est supérieur à X2, et d'autre part la mémoire en cours de lecture qui est la mémoire **16** contenant l'image a. Il y a toujours un décalage entre l'écriture d'une image et sa lecture de façon à pouvoir effectuer la synchronisation du signal vidéo. Selon le critère de gestion d'écriture précédemment défini, à l'instant t1 on commence l'écriture de l'image c dans la mémoire **16** qui contient l'image a en cours de lecture.

A l'instant t2, on commence à lire l'image b dans la mémoire **17** pendant que l'écriture de l'image c dans la mémoire **16** se poursuit. A l'instant t3, on détermine l'état d'écriture qui est maintenant devenu **2** (voir figures **4** et **5**), on commence l'écriture de l'image d dans la mémoire **16** qui est différente de la mémoire **17** en cours de lecture. A l'instant t4, on commence la lecture de la mémoire **16** dans laquelle l'image d est en cours d'écriture. A l'instant t5, on détermine l'état d'écriture qui est égal à **2** pour écrire l'image e dans la mémoire **17** qui est différente de la mémoire **16** en cours de lecture. A l'instant t6, l'état d'écriture est devenu 0, ce qui entraine l'écriture de l'image f dans la mémoire **16** qui est en cours de lecture. A l'instant t7 on commence la lecture de l'image e dans la mémoire **17** pendant l'écriture de l'image f dans la mémoire **16**. A l'instant t8, l'état d'écriture demeure 0, on commence donc l'écriture de l'image g dans la mémoire **17** qui est en cours de lecture. A l'instant t9, on commence la lecture de l'image f inscrite dans la mémoire **16,** pendant l'écriture de l'image g dans la mémoire **17**. A l'instant t10, l'état d'écriture est devenu **2**, on commence l'écriture de l'image h dans la mémoire **17** pendant la lecture de l'image f dans la mémoire **16**.

On peut remarquer dans cet exemple que les images c et g ne seront pas lues puisqu'elles sont écrasées par les images suivantes d et h. Le saut ou la suppression des images c et g est dans ce cas nécessaire afin de pouvoir rattraper le retard de lecture par rapport à l'écriture de façon à synchroniser le signal vidéo de sortie.

La figure 7 illustre un cas similaire à la figure 6 mais pour lequel le signal vidéo d'entrée a une fréquence plus faible que le signal de synchronisation. Dans cet exemple, les instants t1, t3, t5, t7, t8 et t10 représentent séquentiellement les tops de lecture d'images selon le signal de synchronisation alors que les instants t2, t4, t6 et t9 représentent les tops d'écriture d'images selon le signal vidéo d'entrée.

A l'instant t1, commence la lecture de l'image b en cours d'écriture dans la mémoire **17**. A l'instant t2, l'état d'écriture est **2** et on commence l'écriture de l'image c dans la mémoire **16** qui est différente de la mémoire **17** en cours de lecture. A l'instant t3, on commence la lecture de l'image c qui est en cours d'écriture dans la mémoire **16**. A l'instant t4, on détermine l'état d'écriture qui est devenu **1** et on effectue simultanément l'écriture de l'image d dans les mémoires **16** et **17**. A l'instant t5, on commence la lecture de l'image d en cours d'écriture dans la mémoire **17**. A l'instant t6, l'état d'écriture est devenu 0 et on effectue l'écriture de l'image e dans la mémoire **17** en cours de lecture. A l'instant t7, on commence la lecture de l'image d dans la mémoire **16** pendant l'écriture de l'image e dans la mémoire **17**. A l'instant t8, on commence la lecture de l'image e en cours d'écriture dans la mémoire **17**. A l'instant t9, l'état d'écriture est devenu **2** et on écrit l'image f dans la mémoire **16** différente de la mémoire **17** en cours de lecture. A l'instant t10, on commence la lecture de l'image f en cours d'écriture dans la mémoire **16**.

Comme on peut le remarquer, l'image d est lue deux fois (gel d'image) afin de compenser l'avance du signal de synchronisation par rapport au signal de la vidéo d'entrée (glissement en fréquence tendant à ralentir l'écriture par rapport à la lecture). Afin d'éviter le phénomène de tremblement d'images lors du gel d'images (image d à la figure **7**) notamment lorsque l'on se trouve dans une séquence vidéo ou le mouvement des objets filmés est rapide (une course hippique par exemple), on effectue une interpolation pour la seconde lecture de l'image d.

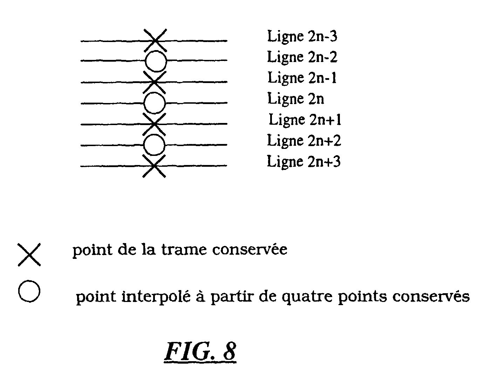

Le principe d'interpolation est illustré sur la figure **8**. Il consiste à appliquer un algorithme mathématique permettant à partir d'une trame de parité prédéterminée (par exemple les lignes impaires) pour calculer les lignes de l'autre trame (les lignes paires). Ainsi, l'image interpolée d, est définie selon la relation suivante :

$$y_{2n} = -1/16\ x_{2n-3} + 9/16\ x_{2n-1} + 9/16\ x_{2n+1} - 1/16\ x_{2n+3}$$

$$y_{2n+1} = x_{2n+1}$$

où $x_{2n+1}$ représente les lignes de la dernière trame lue de l'image d ; $y_{2n}$ et $y_{2n+1}$ représentent les lignes paires et impaires (les deux trames) de l'image d interpolée

Le principe du gel d'images avec interpolation selon l'invention peut également être utilisé pour supprimer les parasites lors de commutation entre deux signaux vidéo d'entrée. Dans le cas d'une commutation synchrone (par rapport au signal de synchronisation) de deux signaux vidéo asynchrones ou déphasés à l'entrée du synchroniseur **13,** l'invention permet, grâce à la capacité de mémorisation de deux images et les critères de gestion spécifiques de l'écriture et de lecture de ces deux mémoires, de pallier ces défauts en créant une image de temporisation qui correspond à l'image interpolée à partir de la dernière trame lue de la dernière image du premier signal vidéo avant la commutation au second signal vidéo.

De même, ce même principe s'applique à la commutation asynchrone (par rapport au signal de synchronisation) de deux signaux vidéo synchrones mais déphasés l'un par rapport à l'autre. Ce même principe s'applique également au cas de la suppression du signal vidéo d'entrée au synchroniseur pour afficher en permanence l'image interpolée de la dernière image lue avant la suppression du signal d'entrée. En outre, ce même principe permet d'améliorer la fonction arrêt sur image, car l'image interpolée permet d'éviter l'effet dit "flicker" résultant de la lecture répétée d'une même image lorsque les mouvements filmés sont importants.

L'exemple décrit ci-dessus permet d'avoir une tolérance au glissement en fréquence du signal vidéo d'entrée d'environ 25 % par rapport au signal de synchronisation, ce qui signifie que l'invention permet de conserver une marge d'au moins une demi-trame entre l'écriture d'une image et sa lecture. La suppression d'une image ou la relecture d'une image avec interpolation sont effectuées automatiquement pour compenser les glissements en fréquence du signal vidéo d'entrée. On peut citer comme exemple pour un signal vidéo numérique au standard 4:2:2 parallèle en 625 lignes par image, la fréquence d'horloge du signal vidéo d'entrée du synchroniseur peut varier de 20,3 MHz à 33,7 MHz pour un signal de synchronisation de 27 MHz (soit + ou - 25 % de cette fréquence de référence).

Le principe des trois états d'écriture permet d'élargir encore d'avantage la tolérance du synchroniseur au glissement en fréquence jusqu'à environ 33 %. En effet, rien n'empêche que l'on définit les valeurs X1 et X2 comme étant respectivement les nombres entiers correspondant à un tiers et au deux tiers du nombre total de lignes X d'une image. Le principe de gestion de l'écriture et de lecture défini ci-dessus demeure valable.

Il résulte de ce qui précède que l'invention permet la suppression d'une image lors du passage de l'état 0 à l'état 2, et le gel d'une image lors du passage de l'état 1 à l'état 0. Le double état 1 et 2 pour l'intervalle X1 < x < X2 a pour fonction importante d'éviter une succession de gels d'images dans le cas limite d'une oscillation de glissement en fréquence autour du déphasage X2. En effet, le passage de l'état 2 à l'état 0 et vice versa, n'implique pas de gel d'image (figure 4). Ainsi, le signal vidéo synchronisé ne comporte pas de gels successifs d'images qui sont visuellement très génants.

Cependant, il subsiste un problème de succession de suppressions d'images dans ce cas limite par le passage répété de l'état 0 à l'état 2. Ce phénomène est beaucoup moins perceptible à l'oeil que la succession de gels d'images.

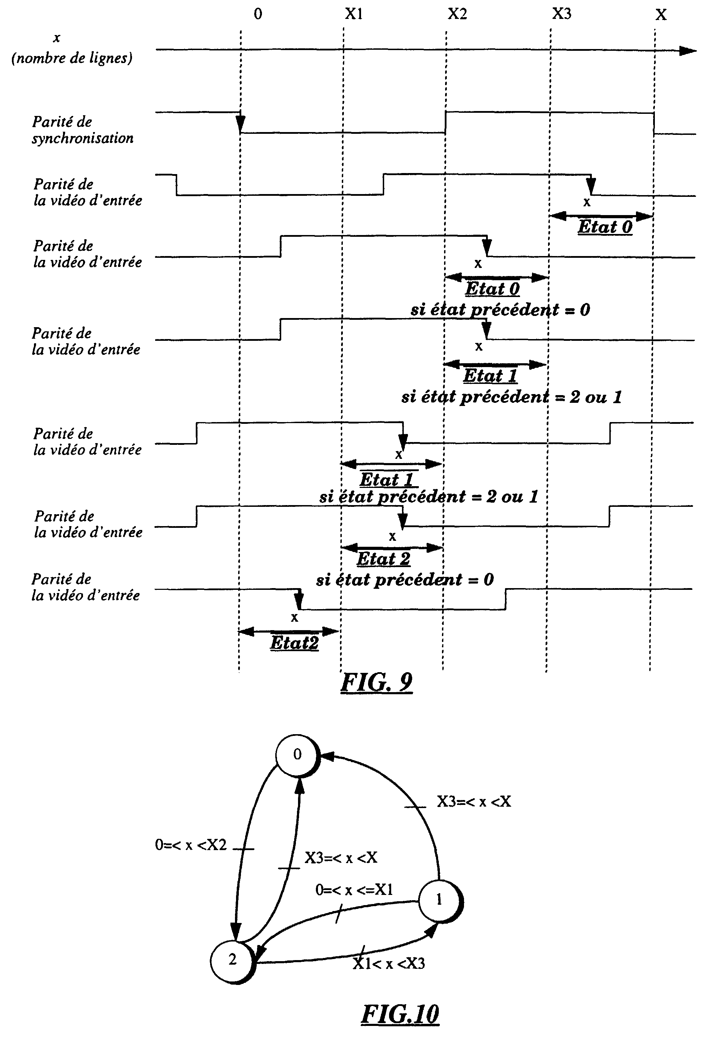

La variante de l'invention illustrée aux figures 9 et 10 permet de supprimer non seulement la succession de gels d'images mais également la succession de suppressions d'images dans ce cas limite. En effet, autour de X2, l'oscillation du déphasage se traduit maintenant par les passages des états suivants : 0-2-1-1-1... (alors que la variante des figures 4 et 5 donne les passages des états suivants : 0-2-0-2-0...).

Etant donné que les figures 9 et 10 sont suffisantes en soi pour permettre la compréhension de la définition des états et le passage entre les états, cette nouvelle variante ne sera pas décrite. Le découpage en quatre (X1, X2, X3) du temps de lecture d'une image entraine cependant une limite à la tolérance du synchroniseur au glissement en fréquence de 25 %.

## Revendications

1.  Procédé de synchronisation d'un signal vidéo numérique (15) par rapport à un signal de synchronisation (19) au moyen d'une unité de mémorisation dans laquelle le signal vidéo est écrit dans sa fréquence propre et ensuite lu selon la fréquence du signal de synchronisation pour constituer un signal vidéo synchronisé (18), consistant :

    -   à constituer dans l'unité de mémorisation deux zones mémoires (16, 17) parallèles, chacune pouvant contenir une image vidéo,
    -   à lire séquentiellement et alternativement les images vidéo contenues dans lesdites zones mémoires , caractérisé en ce qu'il consiste :
    -   à déterminer un état d'écriture parmi plusieurs états d'écriture définis en fonction du déphasage du début de l'écriture d'une image par rapport au début de la lecture d'une image et de l'état d'écriture précédent , et
    -   à déterminer à chaque début d'écriture d'images la zone mémoire en cours de lecture et l'état d'écriture en vue d'effectuer l'écriture de l'image dans une ou deux desdites zones mémoires.

2.  Procédé de synchronisation selon la revendication 1, caractérisé en ce que l'on compte le nombre de lignes de balayage, x, séparant le début d'écriture d'une image du début de lecture d'une image pour déterminer le déphasage, et on remet à zéro le comptage à chaque début de lecture d'images.

3.  Procédé de synchronisation selon la revendication 1 ou 2, caractérisé en ce que l'on définit trois états d'écriture selon le déphasage entre le signal vidéo d'entrée et le signal de synchronisation, avec un état intermédiaire et deux états normaux.

4.  Procédé de synchronisation selon la revendication 3 en combinaison avec la revendication 2, caractérisé en ce que l'on divise le temps de lecture d'une image en trois zones selon le nombre de lignes à compter du début de lecture de l'image, X1, X2, X où X représente le nombre total de lignes de balayage d'une image et où X1 < X2 < X, que l'on définit l'état 0 si $X2 \leq x < X$; l'état 2 si $x \leq X1$ ou si $X1 < x < X2$ lorsque l'état précédent est égal à 0; l'état 1 si $X1 < x < X2$ lorsque l'état précédent est égal à 2, et qu'à l'état 0, on écrit l'image dans la mémoire en cours de lecture, à l'état 1, l'image est écrite simultanément dans les deux mémoires, et à l'état 2, l'image est écrite dans la mémoire différente de celle en cours de lecture.

5.  Procédé de synchronisation selon l'une des revendications précédentes, caractérisé en ce qu'on effectue un gel d'images par interpolation de la dernière image lue dans l'un des cas suivants :

a) si la fréquence du signal vidéo d'entrée est inférieure à la fréquence du signal de synchronisation, et lorsque le déphasage entre l'écriture et la lecture devient inférieur ou égal à un tiers d'image;

b) s'il y a commutation entre deux signaux vidéo d'entrée déphasés;

c) s'il y a suppression du signal vidéo d'entrée;

d) si l'on effectue un arrêt sur image pour le signal vidéo d'entrée.

6. Procédé de synchronisation selon l'une des revendications précédentes, caractérisé en ce que si la fréquence du signal vidéo d'entrée est supérieure à la fréquence du signal de synchronisation et lorsque le déphasage entre l'écriture et la lecture devient inférieur à un tiers d'image, on effectue une écriture de l'image sur une image non encore lue, de façon à supprimer une image de lecture.

7. Procédé de synchronisation selon la revendication 4 ou bien selon la revendication 5 ou 6 en combinaison avec la revendication 4; caractérisé en ce que les nombres X1 et X2 sont des nombres entiers correspondant respectivement à un tiers et à deux tiers du nombre total de lignes , X, d'une image.

8. Procédé de synchronisation selon la revendication 3 en combinaison avec la revendication 2, ou bien selon la revendication 5 ou 6 en combinaison avec la revendication 2 et dans la mesure où elle ne dépend pas de la revendication 4, où ledit déphasage est inférieur ou égal à un quart d'image, caractérisé en ce que l'on divise le temps de lecture d'une image en quatre zones selon le nombre de lignes à compter du début de lecture de l'image, X1, X2, X3, X où X représente le nombre total de lignes de balayage d'une image et où $X1 < X2 < X3 < X$, que l'on définit l'état 0 si $X3 \leq x < X$ ou si $X2 \leq < X3$ lorsque l'état précédent est égal 0 ; l'état 2 si $x \leq X1$ ou si $X1 < x < X2$ lorsque l'état précédent est égal à 0; l'état 1 si $X1 < x < X3$ si l'état précédent est égal à 2 ou 1, et qu'à l'état 0, on écrit l'image dans la mémoire en cours de lecture; à l'état 1, on écrit l'image simultanément dans les deux mémoires; et à l'état 2, on écrit l'image dans la mémoire différente de celle en cours de lecture.

9. Procédé de synchronisation selon la revendication 8, caractérisé en ce que les nombres X1, X2, et X3 sont des nombres entiers correspondant respectivement à un quart, à la moitié et aux trois quarts du nombre total de lignes, X, d'une image.

10. Dispositif de synchronisation (13) comprenant une unité de mémorisation dans lequel est écrit un signal vidéo numérique d'entrée (15) avec sa fréquence propre, ledit signal vidéo étant ensuite lu selon la fréquence d'un signal de synchronisation (19) en vue de fournir un signal vidéo synchronisé (18), comprenant deux zones mémoires (16, 17) parallèles pouvant contenir chacune une image vidéo, une unité de gestion (21) de lecture séquentielle et alternative des zones mémoires (16, 17), caractérisé en ce qu'il comprend une unité de détermination (23) d'un état d'écriture parmi plusieurs états d'écriture définis en fonction du déphasage du début de l'écriture d'une image par rapport au début de la lecture d'une image et de l'état d'écriture précédent, et une unité (24) de gestion de l'écriture d'images dans une ou deux desdites zones mémoires selon l'état d'écriture et la zone mémoire en cours de lecture.

11. Dispositif de synchronisation selon la revendication 10, caractérisé en ce que l'unité de détermination (23) des états d'écriture comprend un compteur de lignes de balayage vidéo remis à zéro à chaque début de lecture, le nombre de lignes, x, séparant le début de l'écriture du début de la lecture déterminant le déphasage entre le signal vidéo d'entrée (15) et le signal de synchronisation (19).

12. Dispositif de synchronisation selon l'une des revendications 10 et 11, caractérisé en ce qu'il comprend deux unités d'extraction (20, 22) chacune fournissant des caractéristiques de fréquence et de top d'images liées au signal vidéo d'entrée (15) d'une part et au signal de synchronisation (19) d'autre part, de façon à permettre respectivement de gérer l'écriture et la lecture des images vidéo dans les deux zones mémoires (16, 17).

13. Dispositif de synchronisation selon l'une des revendications 10 à 12, caractérisé en ce que l'unité de détermination (23) des états d'écriture et l'unité (24) de gestion de l'écriture d'images fonctionnent selon l'une des revendications 4 à 9.

**Patentansprüche**

1. Verfahren zur Synchronisierung eines digitalen Videosignals (15) zu einem Synchronisiersignal (19) mittels einer Speichereinheit, in die das Videosignal mit seiner Eigenfrequenz eingeschrieben und danach entsprechend der Frequenz des Synchronisiersignals ausgelesen wird, um dadurch ein synchronisiertes Videosignal (18) zu bilden, enthaltend folgende Schritte:

- Bilden von zwei parallelen Speicherbereichen (16, 17) in der Speichereinheit, von denen jeder ein Videobild enthalten kann,
- sequentielles und abwechselndes Lesen der in den beiden Speicherbereichen enthaltenen Videobilder, gekennzeichnet durch folgende Schritte:

- Bestimmen eines Schreibstandes unter mehreren Schreibständen, die als Funktion der Phasenverschiebung des Beginns des Schreibens eines Bildes relativ zu dem Beginn des Lesens eines Bildes und des vorangehenden Schreibstandes definiert sind, und

- Bestimmen des Speicherbereichs im Laufe des Lesens und den Schreibstand bei jedem Beginn des Schreibens der Bilder im Hinblick auf das Schreiben des Bildes in einem oder beiden Speicherbereichen.

2. Verfahren zur Synchronisierung nach Anspruch 1, dadurch gekennzeichnet, daß die Zahl der Ablenkzeilen, x, gezählt wird, die den Beginn des Schreibens eines Bildes von dem Beginn des Lesens eines Bildes trennen, um dadurch die Phasenverschiebung zu ermitteln, und daß das Zählergebnis bei jedem Beginn des Lesens der Bilder auf null zurückgesetzt wird.

3. Verfahren zur Synchronisierung nach Anspruch 1 oder 2, dadurch gekennzeichnet, daß drei Schreibstände entsprechend der Phasenverschiebung zwischen dem Eingangs-Videosignal und dem Synchronisiersignal definiert werden, mit einem mittleren Stand und zwei normalen Ständen.

4. Verfahren zur Synchronisierung nach Anspruch 3 in Kombination mit Anspruch 2, dadurch gekennzeichnet, daß die Zeit des Lesens eines Bildes entsprechend der Anzahl der vom Beginn des Lesens der Bilder X1, X2, X zu zählenden Zeilen in drei Bereiche aufgeteilt wird, wobei X die Gesamtzahl der Ablenkzeilen eines Bildes darstellt und X1 < X2 < X ist, daß der Stand 0 definiert wird, wenn X2 ≤ x < X ist, der Stand 2 definiert wird, wenn x ≤ X1 oder wenn X1 < x < X2 ist, wenn der vorangehende Stand gleich 0 ist, daß der Stand 1 definiert wird, wenn X1 < x < X2 ist, wenn der vorangehende Stand gleich 2 ist, und daß im Zustand 0 ein Bild in dem Speicher im Verlauf des Lesens im Stand 1 geschrieben wird, daß das Bild gleichzeitig in den beiden Speichern geschrieben wird, und im Stand 2 das Bild in dem anderen Speicher als dem im Laufe des Lesens geschrieben wird.

5. Verfahren zur Synchronisierung nach einem der vorangehenden Ansprüche, dadurch gekennzeichnet, daß ein Einfrieren von Bildern durch eine Interpolation des in einem der folgenden Fälle gelesenen letzten Bildes durchgeführt wird:

a) wenn die Frequenz des Eingangs-Videosignals kleiner ist als die Frequenz des Synchronisiersignals und wenn die Phasenverschiebung zwischen dem Schreiben und dem Lesen kleiner oder gleich einem Drittel eines Bildes wird,
b) wenn eine Umschaltung zwischen zwei in der Phase verschobenen Eingangs-Videosignalen erfolgt,
c) wenn eine Unterdrückung des Eingangs-Videosignals erfolgt,
d) wenn ein Standbild für das Eingangs-Videosignal gebildet wird.

6. Verfahren zur Synchronisierung nach einem der vorangehenden Ansprüche, dadurch gekennzeichnet, daß dann, wenn die Frequenz des Eingangs-Videosignals oberhalb der Frequenz des Synchronisiersignals liegt und wenn die Phasenverschiebung zwischen dem Schreiben und dem Lesen kleiner als ein Drittel eines Bildes wird, ein Schreiben des Bildes derart bei einem noch nicht gelesenen Bild so erfolgt, daß ein gelesenes Bild unterdrückt wird.

7. Verfahren zur Synchronisierung nach Anspruch 4 oder nach Anspruch 5 oder 6 in Kombination mit Anspruch 4, dadurch gekennzeichnet, daß die Zahlen X1 und X2 ganze Zahlen sind, die jeweils einem Drittel oder zwei Dritteln der Gesamtzahl der Zeilen, X, eines Bildes entsprechen.

8. Verfahren zur Synchronisierung nach Anspruch 3 in Kombination mit Anspruch 2 oder nach Anspruch 5 oder 6 in Kombination mit Anspruch 2 insoweit, wie es nicht von Anspruch 4 abhängig ist, wobei die Phasenverschiebung kleiner oder gleich einem Viertel eines Bildes ist, dadurch gekennzeichnet, daß die Zeit des Lesens eines Bildes entsprechend der Zahl der zu Beginn des Lesen des Bildes X1, X2, X3, X zu zählenden Zeilen in vier Bereiche aufgeteilt wird, wobei X die Gesamtzahl der Ablenkzeilen eines Bildes darstellt und wobei X1 < X2 < X3 < X ist, daß der Stand 0 definiert wird, wenn X3 ≤ x < X ist oder wenn X2 ≤ x < X3 ist, wenn der vorangehende Stand gleich 0 ist, daß der Stand 2 definiert wird, wenn x ≤ X1 oder wenn X1 < x < X2 ist, wenn der vorangehende Stand gleich 0 ist, daß der Stand 1 definiert wird, wenn X1 < x < X3 ist, wenn der vorangehende Stand gleich 2 oder 1 ist, und daß im Stand 0 das Bild in dem Speicher im Laufe des Lesens geschrieben wird, daß im Stand 1 das Bild gleichzeitig in den beiden Speichern geschrieben wird und im Stand 2 das Bild in einem anderen Speicher als dem im Laufe des Lesens geschrieben wird.

9. Verfahren zur Synchronisation nach Anspruch 8, dadurch gekennzeichnet, daß die Zahlen X1, X2 und X3 ganze Zahlen sind, die jeweils einem Viertel, der Hälfte und drei Vierteln der Gesamtzahl der Zeilen, X, eines Bildes entsprechen.

10. Vorrichtung zur Synchronisierung (13) mit einer Speichereinheit, in die ein digitales Eingangs-Videosignal (15) mit seiner Eigenfrequenz geschrieben wird, das Videosignal danach entsprechend dem Synchronisiersignal (19) gelesen wird, um dadurch ein synchronisiertes Videosignal (18) zu bilden, mit zwei parallelen Speicherbereichen (16, 17), die jeder ein Videobild enthalten können, eine Steuereinheit (21) zum sequentiellen und abwechselnden Lesen der Speicherbereiche (16, 17), gekennzeichnet durch eine Einheit (23) zum Bestimmen eines Schreibstandes unter mehreren Schreibständen, die in Abhängigkeit von der Phasenverschiebung des Beginns des Schreibens eines Bildes relativ zu dem Beginn des Lesens des Bildes und des Standes des vorangehenden Schreibens definiert sind, und eine Steuereinheit (24) zum Schreiben der Bilder in einen oder beiden Speicherbereichen entsprechend dem Schreibstand und des Speicherbereiches im Verlauf des Lesens.

11. Vorrichtung zur Synchronisierung nach Anspruch 10, dadurch gekennzeichnet, daß die Einheit (23) zur Bestimmung der Schreibstände einen Zähler für die Ablenkungzeilen des Video enthält, der bei jedem Beginn des Lesens auf null zurückgesetzt wird, wobei die Anzahl von Zeilen, x, die den Beginn des Schreibens von dem Beginn des Lesens, das die Phasenverschiebung zwischen dem Eingangs-Videosignal (15) und dem Synchronisiersignal (19) bestimmt, trennen.

12. Vorrichtung zur Synchronisierung nach einem der Ansprüche 10 und 11, gekennzeichnet durch zwei Extrahiereinheiten (20, 22), von denen jede Eigenschaften der Frequenz und des Gipfels der gelesenen Bilder bei dem Eingangs-Videosignal (15) bilden, einerseits bei dem Synchronisiersignal (19), derart, daß jeweils das Schreiben und das Lesen der Videobilder in den beiden Speicherbereichen (16, 17) ermöglicht wird.

13. Vorrichtung zur Synchronisierung nach einem der Ansprüche 10 bis 12, dadurch gekennzeichnet, daß die Bestimmungseinheit (23) der Schreibstände und die Steuereinheit (24) für das Schreiben der Bilder nach einem der Ansprüche 4 bis 9 arbeiten.

**Claims**

1. Process for synchronizing a digital video signal (15) with respect to a synchronization signal (19) by means of a storage unit into which the video signal is written in its own frequency and from which it is subsequently read according to the frequency of the synchronization signal so as to constitute a synchronized video signal (18), consisting:

   - in constructing two parallel memory areas (16, 17) in the storage unit, each able to contain a video image,
   - in sequentially and alternately reading the video images contained in the said memory areas, characterized in that it consists:
   - in determining a write state from amongst several write states defined as a function of the phase shift of the start of the writing of an image with respect to the start of the reading of an image and of the preceding write state, and
   - in determining at each start of writing of images the memory area being read and the write state with a view to performing the writing of the image into one or two of the said memory areas.

2. Synchronization process according to Claim 1, characterized in that the number of scan lines, x, separating the start of writing of an image from the start of reading of an image is counted so as to determine the phase shift, and the count is reset to zero with each start of reading of images.

3. Synchronization process according to Claim 1 or 2, characterized in that three write states are defined according to the phase shift between the input video signal and the synchronization signal, with an intermediate state and two normal states.

4. Synchronization process according to Claim 3 in combination with Claim 2, characterized in that the reading time for an image is divided into three areas according to the number of lines to be counted from the start of reading of the image, X1, X2, X where X represents the total number of scan lines of an image and where $X1 < X2 < X$, in that the 0 state is defined if $X2 \leq x < X$; the 2 state if $x \leq X1$ or if $X1 < x < X2$ when the preceding state is equal to 0; the 1 state if $X1 < x < X2$ when the preceding state is equal to 2, and in that in the 0 state, the image is written into the memory being read, in the 1 state, the image is written simultaneously into both memories, and in the 2 state, the image is written into the memory other than the one being read.

5. Synchronization process according to one of the preceding claims, characterized in that freezing of images is performed by interpolation of the last image read in one of the following cases:

   a) if the frequency of the input video signal is less than the frequency of the synchronization signal, and when the phase shift between writing and reading becomes less than or equal to a third of an image;

b) if there is switching between two out-of-phase input video signals;

c) if there is deletion of the input video signal;

d) if a freeze-frame is performed in respect of the input video signal.

6. Synchronization process according to one of the preceding claims, characterized in that if the frequency of the input video signal is greater than the frequency of the synchronization signal and when the phase shift between writing and reading becomes less than a third of an image, a writing of the image onto an as yet unread image is performed, so as to delete a reading image.

7. Synchronization process according to Claim 4 or else according to Claim 5 or 6 in combination with Claim 4; characterized in that the numbers X1 and X2 are integer numbers corresponding respectively to a third and to two thirds of the total number of lines, X, of an image.

8. Synchronization process according to Claim 3 in combination with Claim 2, or else according to Claim 5 or 6 in combination with Claim 2 and in so far as it does not depend on Claim 4, where the said phase shift is less than or equal to a quarter of an image, characterized in that the reading time for an image is divided into four areas according to the number of lines to be counted from the start of reading of the image, X1, X2, X3, X where X represents the total number of scan lines of an image and where $X1 < X2 < X3 < X$, in that the 0 state is defined if $X3 \leq x < X$ or if $X2 \leq x < X3$ when the preceding state is equal to 0; the 2 state if $x \leq X1$ or if $X1 < x < X2$ when the preceding state is equal to 0; the 1 state if $X1 < x < X3$ if the preceding state is equal to 2 or 1, and that in the 0 state, the image is written into the memory being read; in the 1 state, the image is written simultaneously into both memories; and in the 2 state, the image is written into the memory other than the one being read.

9. Synchronization process according to Claim 8, characterized in that the numbers X1, X2 and X3 are integer numbers corresponding respectively to a quarter, to a half and to three quarters of the total number of lines, X, of an image.

10. Synchronization device (13) comprising a storage unit into which is written an input digital video signal (15) with its own frequency, the said video signal subsequently being read according to the frequency of a sychronization signal (19) with a view to providing a synchronized video signal (18), comprising two parallel memory areas (16, 17) which can each contain a video image, a unit (21) for managing the sequential and alternate reading of the memory areas (16, 17), characterized in that it comprises a unit (23) for determining a write state from amongst several write states defined as a function of the phase shift of the start of the writing of an image with respect to the start of the reading of an image and of the preceding write state, and a unit (24) for managing the writing of images into one or two of the said memory areas according to the write state and the memory area being read.

11. Synchronization device according to Claim 10, characterized in that the unit (23) for determining the write states comprises a counter of video scan lines which is reset to zero with each start of reading, the number of lines, x, separating the start of writing from the start of reading determining the phase shift between the input video signal (15) and the synchronization signal (19).

12. Synchronization device according to one of Claims 10 and 11, characterized in that it comprises two extraction units (20, 22) each providing image frequency and cue characteristics related to the input video signal (15) on the one hand and to the synchronization signal (19) on the other hand, so as to make it possible respectively to manage the writing and the reading of the video images into and from the two memory areas (16, 17).

13. Synchronization device according to one of Claims 1 to 12, characterized in that the unit (23) for determining the write states and the unit (24) for managing the writing of images operate according to one of Claims 4 to 9.

*FIG. 1*

décodeur

synchroniseur

synchroniseur

synchroniseur

vidéo provenant
d'un car de reportage

vidéo provenant
d'un autre studio

codeur
numérique

codeur
numérique

codeur
numérique

codeur
numérique

00. 00. 00

unité de
commutation

et de traitement
de la vidéo

unité de
distribution

vers système
d'émission

générateur du signal
de synchronisation

EP 0 732 845 B1

**FIG. 2**

vers système d'émission

unité de distribution — 10

synchroniseur — 13

traitement nimérique — 14

commutateur — 12, 9'

générateur du signal de synchronisation — 4

décodeur — 7

codeur numérique — 2

vidéo provenant d'un car de reportage

vidéo provenant d'un autre studio

00. 00. 00 — 3

5, 6, 11

*FIG. 3*

VIDEO D'ENTREE

VIDEO
SYNCHRONISEE

EP 0 732 845 B1

13

x
(nombre de lignes)

0   X1   X2   X

Parité de
synchronisation

Parité de
la vidéo d'entrée

*Etat 0*

Parité de
la vidéo d'entrée

x

*Etat 1*
**si état précédent = 2**

Parité de
la vidéo d'entrée

x

*Etat 2*
**si état précédent = 0**

Parité de
la vidéo d'entrée

x

*Etat2*

## *FIG. 4*

$X2 =< x < X$

$0 =< x < X2$

$X2 =< x < X$

$0 =< x =< X1$

$X1 < x < X2$

## *FIG.5*

FIG. 6

Parité de
synchronisation

Vidéo d'entrée

Image b     Image c     Image d     Image e     Image f

Parité de
la vidéo d'entrée

t1 t2    t3    t4    t5    t6   t7    t8 t9    t10

$\overline{Etat2}$    $\overline{Etat1}$    $\overline{Etat0}$    $\overline{Etat2}$

Images de sortie

Image a   Image b   Image c   Image d   Image d   Image e
+ interpolation

t1    c → t2    t3 → c    d → t4    t5

16   a    a    c → c    c → c   d → d

17 → b   → b    a       c

b → b   b   b   d → b   d → d → b

t6    t7 → d    t8    f → t9    t10 → f

16   d    d    d    d   f → f → d

17   e → d   e → e → d   e → e → d   e → e   e

e → d

**FIG. 7**

EP 0 732 845 B1

16

| | |
|---|---|
| | Ligne 2n-3 |
| | Ligne 2n-2 |
| | Ligne 2n-1 |
| | Ligne 2n |
| | Ligne 2n+1 |
| | Ligne 2n+2 |
| | Ligne 2n+3 |

$\times$  point de la trame conservée

$\bigcirc$  point interpolé à partir de quatre points conservés

## FIG. 8

x
(nombre de lignes)

0    X1    X2    X3    X

Parité de
synchronisation

Parité de
la vidéo d'entrée

x

*Etat 0*

Parité de
la vidéo d'entrée

x

*Etat 0*
*si état précédent = 0*

Parité de
la vidéo d'entrée

x

*Etat 1*
*si état précédent = 2 ou 1*

Parité de
la vidéo d'entrée

x

*Etat 1*
*si état précédent = 2 ou 1*

Parité de
la vidéo d'entrée

x

*Etat 2*
*si état précédent = 0*

Parité de
la vidéo d'entrée

x

*Etat2*

## FIG. 9

X3=< x <X

0=< x <X2

X3=< x <X

0=< x <=X1

X1< x <X3

## FIG.10